# EUROPEAN PATENT SPECIFICATION

(11) **EP 2 825 544 B1**
(45) Date of publication and mention of the grant of the patent: **08.08.2018**
(21) Application number: 13712078.8
(22) Date of filing: 13.03.2013
(51) Int. Cl.: C07F 9/141, C07F 9/32, C08G 18/76, C08G 18/80, C08K 5/00, C08G 18/38, C08K 5/521

(54) **MODIFIED ISOCYANATE COMPOSITIONS AND METHODS OF PREPARING THE SAME**
MODIFIZIERTE ISOCYANATZUSAMMENSETZUNGEN UND VERFAHREN ZUR HERSTELLUNG DAVON
COMPOSITIONS D'ISOCYANATE MODIFIÉ ET LEURS PROCÉDÉS DE PRÉPARATION

(30) Priority: 15.03.2012 US 201261611094 P
(43) Date of publication of application: 21.01.2015
(73) Proprietor: BASF SE, 67056 Ludwigshafen am Rhein (DE)
(72) Inventor: KUMAR, Rajesh, Riverview, MI 48193 (US); LEBEDINSKI, Nikolay, West Bloomfield, MI 48322 (US)
(74) Representative: Herzog, Fiesser & Partner Patentanwälte PartG mbB
(86) International application number: PCT/US2013/030783
(87) International publication number: WO 2013/138438

(56) References cited:
- WO-A1-96/33231
- WO-A1-98/56843
- US-A1- 2010 256 286

## Description

### BACKGROUND

The present invention generally relates to a modified isocyanate composition and a method of preparing the modified isocyanate composition. More particularly, the modified isocyanate composition includes the reaction product of an isocyanate component and a particular organic acid derivative. The isocyanate component is a compound terminated with at least one isocyanate group.

The use of compositions comprising the reaction products of organic phosphorus containing compounds and isocyanate or polyisocyanate compounds is known. For example, thermosetting compositions including the reaction products of these compounds are used in high solids coating compositions, such as paint compositions, and molding compositions for injection molding processes, such as reaction injection molding processes. Also, such reaction products can be used as blowing agents to produce a solid foamed product, such as polyurethane foam.

In addition, organic phosphorus containing compounds themselves can be used in very small amounts in such products as pot/bench life extenders, as acid catalysts that may enhance cross-linking on curing in paints, or as flame retardant agents. Further uses of organic phosphorus containing compounds include uses as emulsifiers, dispersants, clay stabilizing aids in drilling mud, water repellants for wood, herbicides, pesticides, corrosion inhibitors in lubricants, and anti-wear agents.

The use of isocyanate or polyisocyanate compounds is rapidly growing. Isocyanate or polyisocyanate compounds and their derivatives are manufactured and modified to form blends, prepolymers, and quasi-prepolymers. The resulting products have use in a wide variety of applications, such as those described above.

There exists an opportunity to use organic acid derivatives in certain amounts in isocyanate compositions to provide modified isocyanate compositions for various applications. There also remains an opportunity to provide methods of preparing these compositions.

US 2010/256286 A1 relates to compositions comprising various acidic dialkyl phosphates and isocyanates and their reaction products.

WO 98/56843 A1 relates to polyurethane compositions, and to compositions comprising mono- and dibutylphosphates and isocyanates and their reaction products.

### SUMMARY OF THE INVENTION

The present invention provides a modified isocyanate composition that includes the heated reaction product of a polyurethane including the reaction product of the isocyanate component and the organic acid derivative having the formula (RO)ₙ(M)(E)(EH)₃₋ₙ, wherein the organic acid derivative is present in an amount of at least 1 weight percent of the modified isocyanate composition.

M is phosphorus, n is the integer 1 or the integer 2, E is oxygen, each R is independently hydrogen, an alkyl group, a cyclic aryl group, an acyclic aryl group, a halogen-substituted alkyl group, a halogen-substituted cyclic aryl group or a halogen-substituted acyclic aryl group. The isocyanate and the organic acid derivative are heated at a first temperature and maintained at the first temperature for a first time to form the polyurethane. The polyurethane is heated at a second temperature higher than the first temperature and maintained at the second temperature for a second time to form the heated reaction product. The second temperature is in the range of from 70 to 130 degrees Celsius.

The present invention further provides a method comprising providing an isocyanate component; providing an organic acid derivative having the formula (RO)ₙ(M)(E)(EH)₃₋ₙ; combining said isocyanate component and said organic acid derivative, wherein the ratio of the weight of said isocyanate component to the combined weight of said organic acid derivative and said isocyanate component is from 0.7 to 0.95 prior to reaction; heating said isocyanate component and said organic acid derivative at a first temperature; maintaining the first temperature for a first time, such that said isocyanate component and said organic acid derivative react to form a polyurethane; heating the polyurethane at a second temperature higher than the first temperature, wherein the second temperature is in the range of from 70 to 130 degrees Celsius; and maintaining the second temperature for a second time such that a modified isocyanate compound is formed.

### DETAILED DESCRIPTION OF THE INVENTION

An advantage of the present invention is to provide modified isocyanate compositions, and methods of preparing the same, for use in a wide variety of applications, such as flexible, rigid, CASE (cast, adhesive, sealant, elastomer), foams and coatings applications. This invention provides modified isocyanate compositions that facilitate increased stability of pure isocyanates. The increased stabilization is useful in storage and transportation. The invention also provides modified isocyanate compositions that facilitate flame retardancy. For example, the compositions may be a flame retardant or may be applied to form flame retardant coatings. The method of this invention reduces the amount of organic fuel generated. This invention provides a composition that includes an isocyanate component and an organic acid derivative. The composition includes a reaction mixture including the isocyanate component and the organic acid derivative as well as other materials such as additives.

The isocyanate component is a compound terminated with at least one isocyanate group. The compound terminated with at least one isocyanate group may be terminated at each end with at least one isocyanate group. In this embodiment, the compound includes at least two isocyanate groups. The compound may be a liquid or a solid. The isocyanate component may be part of a composition that includes additional compounds that are also each terminated with at least one isocyanate group. The compound terminated with at least one isocyanate group may be selected from, but is not limited to, the group of aliphatic isocyanates, heterocyclic isocyanates, cycloaliphatic isocyanates, araliphatic isocyanates, aromatic isocyanates, and combinations thereof.

Suitable non-limiting examples of the isocyanate components that are compounds terminated with at least one isocyanate group may include alkylene diisocyanates having 4 to 12 carbons in an alkylene radical such as 1,12-dodecane diisocyanate, 2-ethyl-1,4-tetramethylene diisocyanate, 2-methyl-1,5-pentamethylene diisocyanate, 1,4-tetramethylene diisocyanate and 1,6-hexamethylene diisocyanate, cycloaliphatic diisocyanates such as 1,3- and 1,4-cyclohexane diisocyanate, 1-isocyanato-3,3,5-trimethyl-5-isocyanatomethylcyclohexane (isophorone diisocyanate), 2,4- and 2,6-hexahydrotoluene diisocyanate, 2,4'-dicyclohexylmethane diisocyanate, mixtures of 4,4'- and 2,4'-diphenylmethane diisocyanates and polyphenylenepolymethylene polyisocyanates (polymeric MDI), m-phenylene diisocyanate, 2,4-toluene diisocyanate, 2,6-toluene diisocyanate, hexamethylene diisocyanate, tetramethylene diisocyanate, cyclohexane-1,4-diisocyanate, hexahydrotoluene diisocyanate, naphthalene-1,5-diisocyanate, 1-methoxyphenyl-2,4-diisocyanate, 4,4'-diphenylmethane diisocyanate, 4,4'-biphenylene diisocyanate, 3,3'-dimethoxy-4,4'-biphenyl diisocyanate, 3,3'-dimethyl-4,4'-biphenyl diisocyanate and 3,3'-dimethyldiphenylmethant-4,4'-diisocyanate, 4,4',4"-triphenylmethane triisocyanate, toluene 2,4,6-triisocyanate; 4,4'-dimethyldiphenylmethane-2,2',5,5'-tetraisocyanate, polymethylene polyphenylene polyisocyanate, isomers thereof, and combinations thereof. Particularly suitable compounds may include methylene diphenyl diisocyantes (MDI), polymeric MDI, toluene diisocyanate (TDI), or any combinations thereof.

The term MDI is used in this specification and claims as a general term for methylene(diphenyl diisocyantes) which include the isomers 2,2'-methylene(diphenyl diisocyanate), 2,4'-methylene(diphenyl diisocyanate), (2,4'-MDI) and 4,4'-methylene(diphenyl diisocyanate) (4,4'-MDI). These isomers are referred to together as monomeric MDI or simply MDI. The MDI may have a functionality of 2. The term polymeric MDI is used in this specification and claims as a general term for polymethylenepolyphenylene polyisocyanates which includes polymeric MDI, which includes monomeric MDI and higher homologs of monomeric MDI. Isomers and isomer mixtures differing from MDI are commercially available, and 4,4'-/2,4'-MDI mixtures and polymeric MDI are offered in addition to 4,4'-MDI. Polymeric MDI is a complex mixture of different MDI oligomers.

The term TDI is used in this specification and claims as a general term for toluene diisocyanates. The term toluene diisocyanates includes the isomers 2,4 toluene diisocyanate and 2,6 toluene diisocyanate.

Specific examples of suitable isocyanate components that are compounds terminated with at least one isocyanate group include LUPRANATE® M, LUPRANATE® MM103, LUPRANATE® MI, LUPRANATE® MP102, LUPRANATE® M20, LUPRANATE® M70, LUPRANATE® MS, LUPRANATE® T80 and LUPRANATE® 8020, all commercially available from BASF Corporation.

The organic acid derivate is represented by the formula (RO)ₙ(M)(E)(EH)₃₋ₙ. The identifier n is the integer 1 or the integer 2. M is phosphorus. E is oxygen.

In embodiments of the present invention, the organic acid derivative may be structurally represented by each of the following chemical structures:

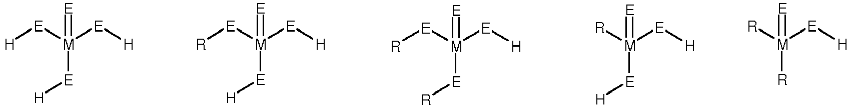

R represents hydrogen, alkyl groups, cyclic groups, aryl groups, and alkyl-aryl groups containing from 1 to 10 carbons. In additional embodiments of the invention, each R individually is the same or different from one another. Each R may independently be further defined as a substituted alkyl group, unsubstituted alkyl group, substituted cyclic aryl group, substituted acyclic aryl group, unsubstituted cyclic aryl group or unsubstituted acyclic aryl group. Each R may independently be further defined as a halogen-substituted alkyl group, a halogen-substituted cyclic aryl group or halogen-substituted acyclic aryl group. Each R may independently be further defined as a saturated alkyl group, unsaturated alkyl group, saturated aryl group, unsaturated aryl group, saturated cyclic aryl group, unsaturated cyclic aryl group, saturated acyclic aryl group or unsaturated acyclic aryl group. The organic acid derivative may be any such derivative with the proviso that the organic acid derivative is not a completely esterified derivative which has no functional group attached to the atom represented by M. Suitable organic acid derivatives include compounds that will react with the compound terminated with at least one isocyanate group. In various embodiments of the present invention, each alkyl group includes from 1 to 10 carbon atoms. This number of carbon atoms in the alkyl group aids in the reduction of organic fuel generated during the reaction. In a particular embodiment of the invention, R represents an unsubstituted or substituted butyl group, however, in additional applications, R may be a shorter chained unsubstituted or substituted alkyl group. The butyl group may be any of n-butyl, sec-butyl, isobutyl or tert-butyl groups. M represents phosphorus and E represents oxygen.

In these embodiments of the present invention, the organic acid deriviative may be structurally represented by each of the following chemical structures:

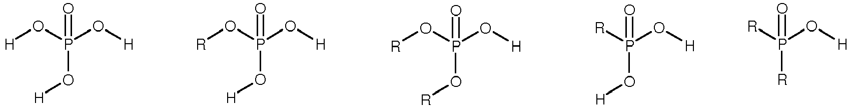

In another embodiment of the invention, R is an unsubstituted n-butyl group.

Suitable organic acid derivatives include, but are not limited to, butyl acid phosphate, dibutyl acid phosphate, phosphoric acid monobutyl ester, phosphoric acid dibutyl ester, phosphoric acid monophenyl ester, phosphoric acid diphenyl ester, phosphoric acid 2-butoxy-1-ethyl ester, 2-ethylhexyl acid phosphate, cetyl acid phosphate, stearyl acid phosphate, mono-methyl acid phosphate, dimethyl acid phosphate, mono-ethyl acid phosphate, diethyl acid phosphate, mono-propyl acid phosphate, dipropyl acid phosphate, halogen substituted derivatives of these compounds, or any combinations thereof.

In addition to the compounds described above, the composition including the isocyanate component and the organic acid derivative may include other suitable additives to impart desired properties. These additives include but are not limited to fillers, surfactants, pigments, catalysts, etc. Other materials other than those described above may be incorporated into the composition depending on the particular end use of the modified isocyanate compositions.

In an embodiment of the present invention, the composition including the isocyanate component and the organic acid derivative may be reacted. The ratio of the weight of the isocyanate component to the combined weight of the organic acid derivative and the isocyanate component is from 0.7 to 0.95. In embodiments of the present invention, the ratio of the weight of the isocyanate component to the combined weight of the organic acid derivative and the isocyanate component is at least 0.8. In embodiments, the ratio of the weight of the isocyanate component to the combined weight of the organic acid derivative and the isocyanate component is at least 0.9. In embodiments, the ratio of the weight of the isocyanate component to the combined weight of the organic acid derivative and the isocyanate component is less than or equal to 0.95. A ratio of the weight of the isocyanate component to the combined weight of the organic acid derivative and the isocyanate component being at least 0.7 and less than or equal to 0.95 is preferred to maximize reactivity and control acidity.

In an embodiment of the invention, a polyurethane is formed by reacting the isocyanate component and the organic acid derivative. The polyurethane may be formed as an intermediate product in the reaction of the isocyanate component and the organic acid derivative.

The formation of a polyurethane as an intermediate product may be schematically represented by the general reaction chemistry as shown immediately below. In the representation, the isocyanate component is 4,4'-MDI and the organic acid derivative is a mixture of butyl acid phosphate and dibutyl acid phosphate.

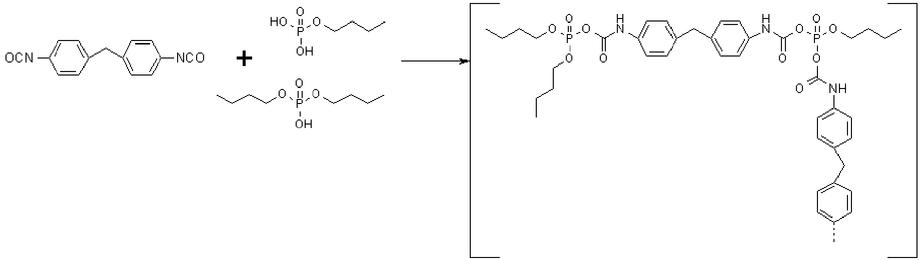

In an alternative embodiment, the formation of a polyurethane as an intermediate product may be schematically represented by the general reaction chemistry as shown immediately below. In this embodiment, the polyurethane is terminated at each end with an NCO group. In the representation, 4,4'-MDI is the isocyanate component and M represents phosphorus, E represents oxygen and R represents an unsaturated or saturated alkyl or aryl group in the organic acid derivative.

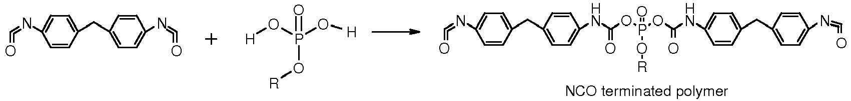

In an alternative embodiment, the formation of a polyurethane as an intermediate product may be schematically represented by the general reaction chemistry as shown immediately below. In this embodiment, the polyurethane is terminated at each end with an OH group. In the representation, 4,4'-MDI is the isocyanate component and M represents phosphorus, E represents oxygen and R represents an unsaturated or saturated alkyl or aryl group in the organic acid derivative.

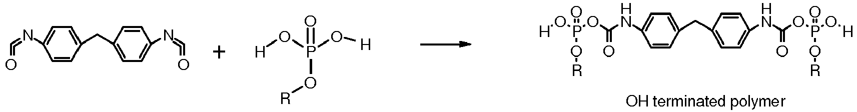

In yet another alternative embodiment, the formation of a polyurethane as an intermediate product may be schematically represented by the general reaction chemistry as shown immediately below. In this embodiment, the polyurethane is terminated at one end with an NCO group and is terminated at the other end with an OH group. In the representation shown, 4,4'-MDI is the isocyanate component and M represents phosphorus, E represents oxygen and R represents an unsaturated or saturated alkyl or aryl group in the organic acid derivative.

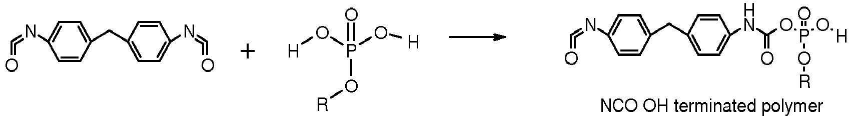

A method of forming a modified isocyanate composition from the reaction of an isocyanate component and an organic acid derivative is also provided. The isocyanate component is a compound terminated with at least one isocyanate group. The method includes combining the isocyanate component and the organic acid derivative.

The isocyanate component and the organic acid derivative may be combined in any number of reaction vessels or mediums as selected by one of ordinary skill in the art. The reaction mixture may be agitated, stirred, mixed or any agitation technique as appreciated by one of ordinary skill in the art. The reaction mixture may then be heated to a first temperature which is maintained for a first time period. Any heating technique suitable for heating the reaction vessel or medium as appreciated by one of ordinary skill in the art may be employed.

The first temperature may be less than or equal to 70 degrees Celsius. In another embodiment of the invention, the first temperature may be less than or equal to 75 degrees Celsius. Not to be bound by theory, it is believed that carbon dioxide is released when the temperature of the reaction mixture reaches the first temperature.

The method may further include heating the reaction mixture to a second temperature higher than the first temperature and maintaining the second temperature for a second time period. Typically this forms a modified isocyanate compound. Not to be bound by theory, it is believed that the modified isocyanate compound is formed after carbon dioxide is released from the reaction of the reaction mixture.

For example, in the embodiment where the isocyanate component is 4,4'-MDI and the organic acid derivative is a mixture of butyl acid phosphate and dibutyl acid phosphate, the general reaction chemistry showing the theoretically release of carbon dioxide may be schematically represented as follows:

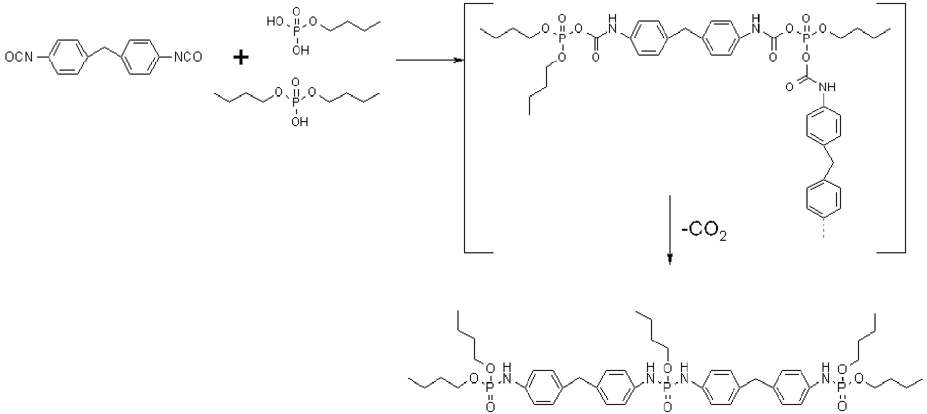

In this representation, the chemical structure of the modified isocyanate compound may be represented by:

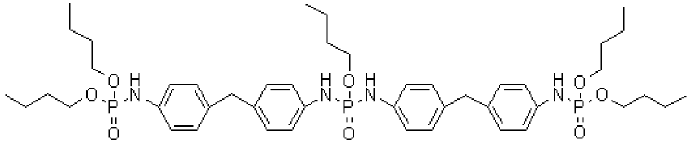

It is to be understood that the modified isocyanate composition may additionally include an unreacted amount of organic acid derivative as described below. The modified isocyanate composition may additionally include an average free NCO content as described below.

In one embodiment of the invention, the second temperature is about 70 to about 90 degrees Celsius. In another embodiment of the invention, the second temperature is about 90 to about 100 degrees Celsius. In another embodiment of the invention, the second temperature is about 100 to about 110 degrees Celsius. In another embodiment of the invention, the second temperature is about 110 to about 125 degrees Celsius. In another embodiment of the invention, the second temperature is about 125 to about 130 degrees Celsius. In another embodiment of the invention, the second temperature is less than or equal to 125 degrees Celsius. In another embodiment of the invention, the second temperature is less than or equal to 130 degrees Celsius.

In an additional embodiment of the invention, the first time period and the second time period when added together are at least one hour. In a further embodiment, the first time period and the second time period when added together are about two hours.

The modified isocyanate composition may include the modified isocyanate compound and an unreacted amount of organic acid derivative. In one embodiment, the organic acid derivate is present in the modified isocyanate composition in an amount of at least one weight percent based on the total weight of the modified isocyanate composition. In another embodiment, the organic acid derivate is present in the modified isocyanate composition in an amount of not more than 50 weight percent based on the total weight of the modified isocyanate composition. In still another embodiment, the organic acid derivate is present in the modified isocyanate composition in an amount of about four weight percent based on the total weight of the modified isocyanate composition. In a further embodiment, the organic acid derivate is present in the modified isocyanate composition in an amount of about nine weight percent based on the total weight of the modified isocyanate composition. The organic acid derivate being present in an amount of at least one weight percent and in an amount less than or equal to 50 percent of the modified isocyanate composition is preferred to control NCO content.

The modified isocyanate composition including the modified isocyanate compound and the unreacted amount of organic acid derivative may additionally include an average free NCO content. In one embodiment, the average free NCO content of the modified isocyanate composition is at least 19 weight percent based on the total weight of the modified isocyanate composition. In another embodiment, the average free NCO content of the modified isocyanate composition is not more than 30 weight percent based on the total weight of the modified isocyanate composition. In another embodiment, the average free NCO content of the modified isocyanate composition is about 25 weight percent based on the total weight of the modified isocyanate composition. An average free NCO content is of at least 19 weight percent and less than or equal to 30 weight percent of the modified isocyanate composition is preferred to maximize reactivity and stability.

The average free NCO content is measured potentiometrically as known and practiced by one of ordinary skill in the art by typical gas phase chromatography as appreciated by one of ordinary skill in the art.

In an embodiment of a further method, the modified isocyanate composition may additionally be reacted with another isocyanate component which is a compound terminated with at least one isocyanate group. The compound terminated with at least one isocyanate group may include MDI, polymeric MDI, TDI, or any combinations thereof, as described above. The compound may be a liquid or a solid. In an embodiment of the invention, the modified isocyanate composition is reacted in an amount of at least 45 percent of the combined weight of the modified isocyanate composition and the isocyanate component. The isocyanate component is reacted in the balance amount.

The composition of the present invention may additionally include catalysts, plasticizers, solvents, etc. For example, triethylphosphate may be included in the composition of the present invention. In addition or alternatively, the composition of the present invention may include Fyrol PCF or similar compounds as is appreciated by one of ordinary skill in the art, TXIB, gamma-butyrolactone, propylene carbonate, aliphatic hydrocarbon solvents, aromatic solvents, mesamoll.

Disclosed examples 1 to 11 and examples 13 to 15 are for reference.

### EXAMPLES

### Example 1

A modified isocyanate composition is formed by charging methylene diphenyl diisocyante (Lupranate® MI) and butyl acid phosphate in a one liter flask under agitation and heating the contents of the flask to 120 degrees Celsius. The methylene diphenyl diisocyante is present in an amount of 80.54 percent and the butyl acid phosphate is present in an amount of 19.46 percent. The temperature of the reaction mass is maintained for 2 hours. At about 70 degrees Celsius during heating, carbon dioxide release is observed. The carbon dioxide release peaks during the first hours and is observed until completion of the reaction. The resultant product is then cooled to room temperature. The resultant product is then collected for observations and analysis. The average free NCO content of the resultant product is 20.42 percent. The percent of butyl acid phosphate in the resultant product is 0.02 percent. Average free NCO content is measured using potentiometric titration.

### Example 2

A modified isocyanate composition is formed by charging methylene diphenyl diisocyante (Lupranate® M) and butyl acid phosphate in a one liter flask under agitation and heating the contents of the flask to 105 degrees Celsius. The methylene diphenyl diisocyante is present in an amount of 94.08 percent and the butyl acid phosphate is present in an amount of 5.92 percent. The temperature of the reaction mass is maintained for 1 hour. At about 70 degrees Celsius during heating, carbon dioxide release is observed. Most of the carbon dioxide is released during the first 15 minutes of the reaction. The resultant product is then cooled to room temperature. The resultant product is then collected for observations and analysis. The product appears clear. After being stored at room temperature for two days, 40 percent by volume of the product materializes into solids. The product is placed in an oven at 120 degrees Celsius for one hour and the solids mostly disappear. After being cooled to room temperature, solids appear again. The average free NCO content of the resultant product is 20.52 percent. The percent of butyl acid phosphate in the resultant product is 0.03 percent. Average free NCO content is measured using potentiometric titration.

### Example 3

A modified isocyanate composition is formed by charging molten methylene diphenyl diisocyante (Lupranate® M) and butyl acid phosphate in a preheated one liter flask under agitation and heating the contents of the flask to 105 degrees Celsius. The methylene diphenyl diisocyante is present in an amount of 87.38 percent and the butyl acid phosphate is present in an amount of 12.62 percent. The temperature of the reaction mass is maintained for 2 hours. At about 70 degrees Celsius during heating, carbon dioxide release is observed. At about 85 degrees Celsius, large amounts of carbon dioxide release are observed. The reaction mass solidifies quickly but in about 15 minutes, the reaction mass completely liquefies. The temperature is increased to 120 degrees Celsius for 30 minutes, ensuring the dissolution of all solids. The temperature is then decreased to 105 degrees Celsius. The resultant product is then cooled to room temperature. The resultant product is then collected for observations and analysis. The average free NCO content of the resultant product is 24.90 percent. The percent of butyl acid phosphate in the resultant product is zero percent. Average free NCO content is measured using potentiometric titration. The resultant product, when stored at room temperature for a day, appears clear. On the second day, the product, stored at room temperature, exhibits gelling.

### Example 4

A modified isocyanate composition is formed by charging molten methylene diphenyl diisocyante (Lupranate® M) in a preheated one liter flask under agitation and heating the contents of the flask to 105 degrees Celsius. Butyl acid phosphate is added dropwise to the flask. The methylene diphenyl diisocyante is present in an amount of 87.38 percent and the butyl acid phosphate is present in an amount of 12.62 percent. The temperature of the reaction mass is maintained for 2 hours. The resultant product is then cooled to room temperature. The resultant product is then collected for observations and analysis. The average free NCO content of the resultant product is 24.97 percent. The percent of butyl acid phosphate in the resultant product is zero percent. Average free NCO content is measured using potentiometric titration. The resultant product, when stored at room temperature for a day, appears clear. On the second day, the product, stored at room temperature, appears oily due to the stable emulsion.

### Example 5

The modified isocyanate composition of Example 4 is blended with methylene diphenyl diisocyante (Lupranate® M). The modified isocyanate composition of Example 4 is charged in a 16-ounce glass container. The container is heated in an oven to 105 degrees Celsius for 15 minutes. Molten methylene diphenyl diisocyante (Lupranate® M) is added. The modified isocyanate composition of Example 4 is present in an amount of 46.93 percent and the methylene diphenyl diisocyante is present in an amount of 53.07 percent. The glass container is agitated. The next day, the blended product, which had been stored at room temperature, appears cloudy with solids at the bottom of the container. The product is melted and analyzed. The average free NCO content of the product is 29.38 percent. The percent of butyl acid phosphate in the resultant product is zero percent. Average free NCO content is measured using potentiometric titration.

### Example 6

The modified isocyanate composition of Example 4 is blended with a methylene diphenyl diisocyante (Lupranate® M) and another methylene diphenyl diisocyante (Lupranate® MI). The modified isocyanate composition of Example 4 and the Lupranate® MI are charged in a 16-ounce glass container. The container is heated in an oven to 80 degrees Celsius for 15 minutes. Molten Lupranate® M is added. The modified isocyanate composition of Example 4 is present in an amount of 46.94 percent, Lupranate® MI is present in an amount of 26.53 percent and Lupranate® M is present in an amount of 26.53 percent. The glass container is agitated. The blended product, stored at room temperature, appears clear after five days. The average free NCO content of the product is 29.44 percent. The percent of butyl acid phosphate in the resultant product is zero percent. Average free NCO content is measured using potentiometric titration.

### Example 7

The modified isocyanate composition of Example 3 is blended with a methylene diphenyl diisocyante (Lupranate® M) and another methylene diphenyl diisocyante (Lupranate® MI). The modified isocyanate composition of Example 3 and the Lupranate® MI are charged in a 16-ounce glass container. The container is heated in an oven to 80 degrees Celsius for 15 minutes. Molten Lupranate® M is added. The modified isocyanate composition of Example 3 is present in an amount of 46.39 percent, Lupranate® MI is present in an amount of 10.72 percent and Lupranate® M is present in an amount of 42.89 percent. The glass container is agitated. The blended product, stored at room temperature, appears almost clear and has a very slight cloudiness after five days. After an additional five days, the blended product, which has been stored at room temperature, appears very slightly cloudy. The average free NCO content of the product is 29.27 percent. The percent of butyl acid phosphate in the resultant product is zero percent. Average free NCO content is measured using potentiometric titration.

### Example 8

A modified isocyanate composition is formed by charging pure methylene diphenyl diisocyante (Lupranate® M) in a preheated two liter flask under agitation and heating the contents of the flask to 105 degrees Celsius. Butyl acid phosphate is added dropwise to the flask while the temperature is maintained below 110 degrees Celsius. The methylene diphenyl diisocyante is present in an amount of 79.94 percent and the butyl acid phosphate is present in an amount of 20.06 percent. The temperature of the reaction mass is maintained for 2 hours at 105 degrees Celsius. The resultant product is then transferred to a 32 ounce glass container cooled to room temperature. The resultant product, stored at room temperature for a day, appears clear. The average free NCO content of the resultant product is 19.70 percent. The percent of butyl acid phosphate in the resultant product is zero percent. Average free NCO content is measured using potentiometric titration.

### Example 9

The modified isocyanate composition of Example 3 is blended with a methylene diphenyl diisocyante (Lupranate® M) and triethyl phosphate (TEP). The TEP acts as a solvent and may be used to impart stabilitiy to the blend. Any solvent or plasicizer as described above may be used to impart stability to the blend.

The modified isocyanate composition of Example 3 is charged in a 16-ounce glass container. The container is heated in an oven to 80 degrees Celsius for 15 minutes. Molten Lupranate® M and TEP are added. The modified isocyanate composition of Example 3 is present in an amount of 26.91 percent, Lupranate® M is present in an amount of 68.09 percent and TEP is present in an amount of 5.0 percent. The glass container is agitated. The blended product, stored at room temperature for six days, has some solids at the bottom of the container. About 1 percent of the solids are at the top of the container. The product is melted and analyzed. The average free NCO content of the product is 29.47 percent. The percent of butyl acid phosphate in the resultant product is zero percent. Average free NCO content is measured using potentiometric titration.

### Example 10

The modified isocyanate composition of Example 8 is blended with a methylene diphenyl diisocyante (Lupranate® M). The modified isocyanate composition of Example 8 is charged in a 4-ounce glass container. The container is heated in an oven to 80 degrees Celsius for 15 minutes. Molten methylene diphenyl diisocyante (Lupranate® M) is added. The modified isocyanate composition of Example 8 is present in an amount of 28.88 percent and the methylene diphenyl diisocyante is present in an amount of 71.12 percent. The glass container is agitated. About 1 volume percent of the blended product, stored at room temperature for six days, is in solid form at the bottom of the container. The product is melted and analyzed. The average free NCO content of the product is 29.42 percent. The percent of butyl acid phosphate in the resultant product is zero percent. Average free NCO content is measured using potentiometric titration.

### Example 11

The modified isocyanate composition of Example 8 is blended with a methylene diphenyl diisocyante (Lupranate® M) and another methylene diphenyl diisocyante (Lupranate® MI). The modified isocyanate composition of Example 8 and the Lupranate® MI are charged in a 4-ounce glass container. The container is heated in an oven to 80 degrees Celsius for 15 minutes. Molten Lupranate® M is added. The modified isocyanate composition of Example 8 is present in an amount of 28.88 percent, Lupranate® MI is present in an amount of 14.22 percent and Lupranate® M is present in an amount of 56.90 percent. The glass container is agitated. The blended product, stored at room temperature, appears clear. The blended product is placed in an incubator at 10 degrees Celsius. The next day, at the temperature of 10 degrees Celsius, the blended product is completely solidified. When the product is stored at room temperature for 30 days, 20 percent by volume of the product is observed to have solids. The average free NCO content of the product is 29.45 percent. The percent of butyl acid phosphate in the resultant product is zero percent. Average free NCO content is measured using potentiometric titration.

### Example 12

A modified isocyanate composition is formed by charging toluene diisocyanate (Lupranate® T80, type 1) in a three liter flask under agitation and heating the contents of the flask to 105 degrees Celsius. Butyl acid phosphate is added dropwise while the temperature is maintained below 110 degrees Celsius. The toluene diisocyanate is present in an amount of 72.36 percent and the butyl acid phosphate is present in an amount of 27.64 percent. The temperature of the reaction mass is maintained for 2 hours at 105 degrees Celsius. The resultant product is then collected for observations and analysis. The average free NCO content of the resultant product is 26.85 percent. The resultant product, stored at room temperature for 14 months and appears clear at 14 months. The percent of butyl acid phosphate in the resultant product is 1.75 percent. Average free NCO content is measured using potentiometric titration.

### Example 13

A modified isocyanate composition is formed by charging polymeric MDI (Lupranate® M20) in a two liter glass flask under agitation and heating the contents of the flask to 105 degrees Celsius. Butyl acid phosphate is added dropwise while the temperature is maintained below 110 degrees Celsius. The polymeric TDI is present in an amount of 90.66 percent and the butyl acid phosphate is present in an amount of 9.34 percent. The temperature of the reaction mass is maintained for 2 hours at 105 degrees Celsius. The resultant product is then collected for observations and analysis. The average free NCO content of the resultant product is 25.72 percent. The resultant product, stored at room temperature for 14 months and appears clear at 14 months. The percent of butyl acid phosphate in the resultant product is zero percent. Average free NCO content is measured using potentiometric titration.

### Example 14

The modified isocyanate composition of Example 8 is blended with a methylene diphenyl diisocyante (Lupranate® M) and another methylene diphenyl diisocyante (Lupranate® MI). The modified isocyanate composition of Example 8 and the Lupranate® MI are charged in a 1-liter glass flask. Agitation is started and the container is heated to 60 degrees Celsius. Under agitation, molten Lupranate® M is added and the reaction mass is stirred for 15 minutes. While agitating, at 60 degrees Celsius, PLURACOL® 1062 polyol (having 0.0274 weight percent water), a polyol commercially available from BASF Corporation, is added while the temperature is maintained below 80 degrees Celsius. The modified isocyanate composition of Example 8 is present in an amount of 21.72 percent, Lupranate® MI is present in an amount of 10.69 percent, Lupranate® M is present in an amount of 42.79 percent and the PLURACOL® 1062 polyol is present in an amount of 24.80 percent. The temperature of the reaction mass is maintained for 1 hour at 80 degrees Celsius and then for 1 hour at 100 degrees Celsius. At 100 degrees Celsius, the reaction mass changes color from light yellow to brown and then became clear. Upon cooling to 70 degrees Celsius, the reaction mass becomes cloudy. The resultant product is then collected and analyzed. After being maintained at room temperature for one day, the product appears cloudy. After being maintained at room temperature for five days, the product separates into two layers. The bottom layer is dark and oily and comprises about 5 volume percent of the total product. The average free NCO content of the product is 21.42 percent. The percent of butyl acid phosphate in the resultant product is zero percent. Average free NCO content is measured using potentiometric titration.

### Example 15

A composition is formed by charging molten methylene diphenyl diisocyante (Lupranate® M) in a preheated one liter flask under agitation and heating the contents of the flask to 60 degrees Celsius. PLURACOL® 1062 polyol (having 0.0274 weight percent water), a polyol commercially available from BASF Corporation, is added dropwise while the temperature is maintained below 80 degrees Celsius. After the polyol is added, butyl acid phosphate is added dropwise to the flask while the temperature is maintained below 90 degrees Celsius. The methylene diphenyl diisocyante is present in an amount of 70.25 percent, the butyl acid phosphate is present in an amount of 4.36 percent and the PLURACOL® 1062 polyol is present in an amount of 25.39 percent. The temperature of the reaction mass is maintained for 2 hours at 80 degrees Celsius. The resultant product is then collected for observations and analysis. After being maintained at room temperature for one day, the product appears cloudy. After being maintained at room temperature for four days, the product separates into two layers. After being maintained at room temperature for 32 days, 20 percent of the volume of the product is in solid form. The average free NCO content of the product is 22.05 percent. The percent of butyl acid phosphate in the resultant product is 0.2 percent. Average free NCO content is measured using gas phase chromatography.

The examples are summarized in the following table. The components of each aforementioned composition are set forth below in approximate weight percentages. M is Lupranate® M, MI is Lupranate® MI, M20 is Lupranate® M20, TEP is triethylphosphate and BAP is butyl acid phosphate.

**TABLE**

| Type | Ex. | Composition | Reaction Temp. | %NCO |
|---|---|---|---|---|
| | | | | |
| Reaction | 1 | MI 80.54%; BAP 19.46% | 120 °C | 20.42 |
| Reaction | 2 | M 94.08%; BAP 5.92% | 105 C | 29.52 |
| Reaction | 3 | M 87.38%; BAP 12.62% | 105 C | 24.9 |
| Reaction | 4 | M 87.38%; BAP 12.62% | 105 C | 24.97 |
| Blend | 5 | ISO 46.934%; M 53.066% | 80 C | 29.38 |
| Blend | 6 | ISO 46.934%; M 26.533; MI 26.533% | 80 C | 29.27 |
| Blend | 7 | ISO 46.390%; M 10.722; MI 42.888% | 80 C | 29.44 |
| Reaction | 8 | M 79.94%; BAP 20.06% | 105 C | 19.7 |
| Blend | 9 | ISO 26.906%; M 68.094; TEP 5.00% | 80 | 29.47 |
| Blend | 10 | ISO 28.88%; M 71.12% | 80 | 29.42 |
| Blend | 11 | ISO 28.88%; M 56.94%; MI 14.22% | 80 | 29.45 |
| Reaction | 12 | TDI Type 172.36%; BAP 27.64% | 105 | 26.85 |
| Reaction | 13 | M20 90.66%; BAP 9.34% | 105 | 25.72 |
| Reaction | 14 | ISO 21.72; M 42.79%; MI 10.69%; Pluracol Polyol 1062 24.80 | 80-100 C | 21.42 |
| Reaction | 15 | M 70.25%; Pluracol Polyol 1062 25.39%; BAP 4.36 | 80 | 22.05 |

## Claims

1. A modified isocyanate composition comprising:
the heated reaction product of a polyurethane comprising the reaction product of
an isocyanate component; and
an organic acid derivative having the formula (RO)ₙ(M)(E)(EH)₃₋ₙ,
wherein M is phosphorus,
n is the integer 1 or the integer 2,
E is oxygen,
each R is independently hydrogen, an alkyl group, a cyclic aryl group, an acyclic aryl group, a halogen-substituted alkyl group, a halogen-substituted cyclic aryl group or a halogen-substituted acyclic aryl group,
wherein the isocyanate and the organic acid derivative are heated at a first temperature and maintained at the first temperature for a first time to form the polyurethane;
wherein the polyurethane is heated at a second temperature higher than the first temperature and maintained at the second temperature for a second time to form the heated reaction product;
wherein the second temperature is in the range of from 70 to 130 degrees Celsius; and
wherein said organic acid derivative is present in an amount of at least 1 weight percent of the modified isocyanate composition.

2. The modified isocyanate composition of claim 1, wherein said organic acid derivative is present in an amount of less than or equal to 50 weight percent of the modified isocyanate composition, or wherein the heated reaction product has an average free NCO content of at least 19 percent and not more than 30 percent.

3. The modified isocyanate composition of claim 1 or claim 2, wherein M is phosphorus, E is oxygen, and R is a butyl group and wherein said isocyanate component is selected from the group of MDI, polymeric MDI, TDI, and combinations thereof, or
wherein said organic acid derivative is selected from the group of phosphoric acid monobutyl ester, phosphoric acid dibutyl ester, phosphoric acid monophenyl ester, phosphoric acid diphenyl ester, phosphoric acid 2-butoxy-1-ethyl ester, 2-ethylhexyl acid phosphate, cetyl acid phosphate, stearyl acid phosphate, butyl acid phosphate, dibutyl acid phosphate, mono-methyl acid phosphate, dimethyl acid phosphate, mono-ethyl acid phosphate, diethyl acid phosphate, mono-propyl acid phosphate, dipropyl acid phosphate, halogen substituted derivatives thereof and combinations thereof.

4. The modified isocyanate composition of any of claims 1 to 3, wherein the composition is a flame retardant.

5. A method comprising:
providing an isocyanate component;
providing an organic acid derivative having the formula (RO)ₙ(M)(E)(EH)₃₋ₙ,
wherein M is phosphorus,
n is the integer 1 or the integer 2,
E is oxygen,
each R is independently hydrogen, an alkyl group, a cyclic aryl group, an acyclic aryl group, a halogen-substituted alkyl group, a halogen-substituted cyclic aryl group or a halogen-substituted acyclic aryl group; and
combining said isocyanate component and said organic acid derivative, wherein the ratio of the weight of said isocyanate component to the combined weight of said organic acid derivative and said isocyanate component is from 0.7 to 0.95 prior to reaction;
heating said isocyanate component and said organic acid derivative at a first temperature; and
maintaining the first temperature for a first time, such that said isocyanate component and said organic acid derivative react to form a polyurethane;
heating the polyurethane at a second temperature higher than the first temperature, wherein the second temperature is in the range of from 70 to 130 degrees Celsius; and
maintaining the second temperature for a second time such that a modified isocyanate compound is formed.

6. The method of claim 5, wherein the first temperature is less than or equal to 70 degrees Celsius, or wherein the first time and the second time together are at least one hour, or wherein said organic acid derivative is present in an amount of at least one weight percent of the combined weight of said modified isocyanate compound, said isocyanate component and said organic acid derivative.

7. The method of claim 5 or claim 6, wherein said organic acid derivative is present in an amount of at least one weight percent of the combined weight of said modified isocyanate compound, said isocyanate component and said organic acid derivative, and wherein said organic acid derivative is present in an amount of less than or equal to 50 weight percent of the combined weight of said modified isocyanate compound, said isocyanate component and said organic acid derivative.

8. The method of any one of claim 7, wherein said organic acid derivative is present in an amount of at least one weight percent of the combined weight of said modified isocyanate compound, said isocyanate component and said organic acid derivative, and wherein the modified isocyanate compound has an average free NCO content of at least 19 percent and not more than 30 percent.

9. The method of any one of claims 6 to 8, wherein M is phosphorus, E is oxygen, and R is a butyl group and wherein said isocyanate component is selected from the group of MDI, polymeric MDI, TDI, and combinations thereof, or
wherein said organic acid derivative is selected from the group of phosphoric acid monobutyl ester, phosphoric acid dibutyl ester, phosphoric acid monophenyl ester, phosphoric acid diphenyl ester, phosphoric acid 2-butoxy-1-ethyl ester, 2-ethylhexyl acid phosphate, cetyl acid phosphate, stearyl acid phosphate, butyl acid phosphate, dibutyl acid phosphate, mono-methyl acid phosphate, dimethyl acid phosphate, mono-ethyl acid phosphate, diethyl acid phosphate, mono-propyl acid phosphate, dipropyl acid phosphate, halogen substituted derivatives thereof and combinations thereof.

10. The method of any one of claims 7 to 9, wherein said organic acid derivative is present in an amount of at least one weight percent of the combined weight of said modified isocyanate compound, said isocyanate component and said organic acid derivative, and further comprising the step of reacting the modified isocyanate composition with a second isocyanate component and wherein the second isocyanate component is selected from the group of MDI, polymeric MDI, TDI, and combinations thereof.

## Patentansprüche

1. Modifiziertes Isocyanat enthaltende Zusammensetzung, umfassend:
das erhitzte Reaktionsprodukt eines Polyurethans,
das das Reaktionsprodukt
einer Isocyanatkomponente und
eines organischen Säurederivats mit der Formel (RO)ₙ(M)(E)(EH)₃₋ₙ
wobei M für Phosphor steht,
n die ganze Zahl 1 oder die ganze Zahl 2 steht,
E für Sauerstoff steht,
R jeweils unabhängig für Wasserstoff, eine Alkylgruppe, eine cyclische Arylgruppe, eine acyclische Arylgruppe, eine halogensubstituierte Alkylgruppe, eine halogensubstituierte cyclische Arylgruppe oder eine halogensubstituierte acyclische Arylgruppe steht,
umfasst,
wobei das Isocyanat und das organische Säurederivats auf eine erste Temperatur erhitzt und über einen ersten Zeitraum bei der ersten Temperatur gehalten werden, um das Polyurethan zu bilden;
wobei das Polyurethan auf eine über der ersten Temperatur liegende zweite Temperatur erhitzt und
über einen zweiten Zeitraum bei dieser zweiten Temperatur gehalten wird, um das erhitzte Reaktionsprodukt zu bilden;
wobei die zweite Temperatur im Bereich von 70 bis 130 Grad Celsius liegt und
wobei das organische Säurederivat in einer Menge von mindestens 1 Gewichtsprozent der modifizierten Isocyanatzusammensetzung vorliegt.

2. Modifiziertes Isocyanat enthaltende Zusammensetzung nach Anspruch 1, wobei das organische Säurederivat in einer Menge von weniger als oder gleich 50 Gewichtsprozent der modifiziertes Isocyanat enthaltenden Zusammensetzung vorliegt oder wobei das erhitzte Reaktionsprodukt einen durchschnittlichen Gehalt an freiem NCO von mindestens 19 Prozent und höchstens 30 Prozent aufweist.

3. Modifiziertes Isocyanat enthaltende Zusammensetzung nach Anspruch 1 oder Anspruch 2, wobei M für Phosphor steht, E für Sauerstoff steht und R für eine Butylgruppe steht und wobei die Isocyanatkomponente aus der Gruppe bestehend aus MDI, polymerem MDI, TDI und Kombinationen davon ausgewählt ist oder
wobei das organische Säurederivat aus der Gruppe bestehend aus Phosphorsäuremonobutylester, Phosphorsäuredibutylester, Phosphorsäuremonophenylester, Phosphorsäurediphenylester, Phosphorsäure-2-butoxy-1-ethylester, saurem 2-Ethylhexylphosphat, saurem Cetylphosphat, saurem Stearylphosphat, saurem Butylphosphat, saurem Dibutylphosphat, saurem Monomethylphosphat, saurem Dimethylphosphat, saurem Monoethylphosphat, saurem Diethylphosphat, saurem Monopropylphosphat, saurem Dipropylphosphat, halogensubstituierten Derivaten und Kombinationen davon ausgewählt ist.

4. Modifiziertes Isocyanat enthaltende Zusammensetzung nach einem der Ansprüche 1 bis 3, wobei sich bei der Zusammensetzung um ein Flammschutzmittel handelt.

5. Verfahren, das Folgendes umfasst:
Bereitstellen einer Isocyanatkomponente;
Bereitstellen eines organischen Säurederivats mit der Formel (RO)ₙ(M)(E)(EH)₃₋ₙ
wobei M für Phosphor steht,
n die ganze Zahl 1 oder die ganze Zahl 2 steht,
E für Sauerstoff steht,
R jeweils unabhängig für Wasserstoff, eine Alkylgruppe, eine cyclische Arylgruppe, eine acyclische Arylgruppe, eine halogensubstituierte Alkylgruppe, eine halogensubstituierte cyclische Arylgruppe oder eine halogensubstituierte acyclische Arylgruppe steht; und
Vereinigen der Isocyanatkomponente und des organischen Säurederivats, wobei das Verhältnis des Gewichts der Isocyanatkomponente zum kombinierten Gewicht des organischen Säurederivats unter Isocyanatkomponente vor der Reaktion 0,7 bis 0,95 beträgt;
Erhitzen der Isocyanatkomponente und des organischen Säurederivats auf eine erste Temperatur; und
Halten der ersten Temperatur über einen ersten Zeitraum, so dass die Isocyanatkomponente und das organische Säurederivats zu einem Polyurethan reagieren;
Erhitzen des Polyurethans auf eine über der ersten Temperatur liegende zweite Temperatur, wobei die zweite Temperatur im Bereich von 70 bis 130 Grad Celsius liegt; und
Halten der zweiten Temperatur über einen zweiten Zeitraum, so dass eine modifizierte Isocyanatverbindung gebildet wird.

6. Verfahren nach Anspruch 5, wobei die erste Temperatur kleiner als oder gleich 70 Grad Celsius ist oder wobei der erste Zeitraum und der zweite Zeitraum zusammen mindestens eine Stunde betragen oder wobei das organische Säurederivat in einer Menge von mindestens einem Gewichtsprozent des kombinierten Gewichts der modifizierten Isocyanatverbindung, der Isocyanatkomponente und des organischen Säurederivats vorliegt.

7. Verfahren nach Anspruch 5 oder Anspruch 6, wobei das organische Säurederivat in einer Menge von mindestens einem Gewichtsprozent des kombinierten Gewichts der modifizierten Isocyanatverbindung, der Isocyanatkomponente und des organischen Säurederivats vorliegt und wobei das organische Säurederivat in einer Menge kleiner als oder gleich 50 Gewichtsprozent des kombinierten Gewichts der modifizierten Isocyanatverbindung, der Isocyanatkomponente und des organischen Säurederivats vorliegt.

8. Verfahren nach einem der Anspruch 7, wobei das organische Säurederivat in einer Menge von mindestens einem Gewichtsprozent des kombinierten Gewichts der modifizierten Isocyanatverbindung, der Isocyanatkomponente und des organischen Säurederivats vorliegt und wobei die modifizierte Isocyanatverbindung einen Gehalt an freiem NCO von mindestens 19 Prozent und höchstens 30 Prozent aufweist.

9. Verfahren nach einem der Ansprüche 6 bis 8, wobei M für Phosphor steht, E für Sauerstoff steht und R für eine Butylgruppe steht und wobei die Isocyanatkomponente aus der Gruppe bestehend aus MDI, polymerem MDI, TDI und Kombinationen davon ausgewählt ist oder
wobei das organische Säurederivat aus der Gruppe bestehend aus Phosphorsäuremonobutylester, Phosphorsäuredibutylester, Phosphorsäuremonophenylester, Phosphorsäurediphenylester, Phosphorsäure-2-butoxy-1-ethylester, saurem 2-Ethylhexylphosphat, saurem Cetylphosphat, saurem Stearylphosphat, saurem Butylphosphat, saurem Dibutylphosphat, saurem Monomethylphosphat, saurem Dimethylphosphat, saurem Monoethylphosphat, saurem Diethylphosphat, saurem Monopropylphosphat, saurem Dipropylphosphat, halogensubstituierten Derivaten und Kombinationen davon ausgewählt ist.

10. Verfahren nach einem der Ansprüche 7 bis 9, wobei das organische Säurederivat in einer Menge von mindestens einem Gewichtsprozent des kombinierten Gewichts der modifizierten Isocyanatverbindung, der Isocyanatkomponente und des organischen Säurederivats vorliegt, und ferner umfassend den Schritt des Umsetzens der modifiziertes Isocyanat enthaltenden Zusammensetzung mit einer zweiten Isocyanatkomponente, und wobei die zweite Isocyanatkomponente aus der Gruppe bestehend aus MDI, polymerem MDI, TDI und Kombinationen davon ausgewählt ist.

## Revendications

1. Composition d'isocyanate modifié comprenant :
le produit réactionnel chauffé d'un polyuréthane
comprenant le produit réactionnel de un composant isocyanate ; et
un dérivé d'acide organique répondant à la formule
(RO)ₙ(M)(E)(EH)₃₋ₙ,
dans lequel M est le phosphore,
n est le nombre entier 1 ou le nombre entier 2,
E est l'oxygène,
chaque R est indépendamment l'hydrogène, un groupe alkyle, un groupe aryle cyclique, un groupe aryle acyclique, un groupe alkyle substitué par halogéno, un groupe aryle cyclique substitué par halogéno ou un groupe aryle acyclique substitué par halogéno,
l'isocyanate et le dérivé d'acide organique étant chauffés à une première température et maintenus à la première température pendant une première durée pour former le polyuréthane ;
le polyuréthane étant chauffé à une seconde température supérieure à la première température et maintenu à la seconde température pendant une seconde durée pour former le produit réactionnel chauffé ;
la seconde température étant dans la plage de 70 à 130 degrés Celsius ; et
ledit dérivé d'acide organique étant présent en une quantité d'au moins 1 pour cent en poids de la composition d'isocyanate modifié.

2. Composition d'isocyanate modifié selon la revendication 1, ledit dérivé d'acide organique étant présent en une quantité inférieure ou égale à 50 pour cent en poids de la composition d'isocyanate modifié ou le produit réactionnel chauffé ayant une teneur moyenne en groupes NCO libres d'au moins 19 pour cent et de pas plus de 30 pour cent.

3. Composition d'isocyanate modifié selon la revendication 1 ou la revendication 2, M étant le phosphore, E étant l'oxygène et R étant un groupe butyle et ledit composant isocyanate étant choisi dans le groupe du MDI, du MDI polymère, du TDI et des associations de ceux-ci ou
ledit dérivé d'acide organique étant choisi dans le groupe de l'ester monobutylique de l'acide phosphorique, de l'ester dibutylique de l'acide phosphorique, de l'ester monophénylique de l'acide phosphorique, de l'ester diphénylique de l'acide phosphorique, de l'ester 2-butoxy-1-éthylique de l'acide phosphorique, du dihydrogénophosphate de 2-éthylhexyle, du dihydrogénophosphate de cétyle, du dihydrogénophosphate de stéaryle, du dihydrogénophosphate de butyle, de l'hydrogénophosphate de dibutyle, du dihydrogénophosphate de monométhyle, de l'hydrogénophosphate de diméthyle, du dihydrogénophosphate de monoéthyle, de l'hydrogénophosphate de diéthyle, du dihydrogénophosphate de monopropyle, de l'hydrogénophosphate de dipropyle, des dérivés substitués par halogéno de ceux-ci et des associations de ceux-ci.

4. Composition d'isocyanate modifié selon l'une quelconque des revendications 1 à 3, la composition étant un agent ignifugeant.

5. Procédé comprenant :
l'utilisation d'un composant isocyanate ;
l'utilisation d'un dérivé d'acide organique répondant à
la formule (RO)ₙ(M)(E)(EH)₃₋ₙ,
dans lequel M est le phosphore,
n est le nombre entier 1 ou le nombre entier 2,
E est l'oxygène,
chaque R est indépendamment l'hydrogène, un groupe alkyle, un groupe aryle cyclique, un groupe aryle acyclique, un groupe alkyle substitué par halogéno, un groupe aryle cyclique substitué par halogéno ou un groupe aryle acyclique substitué par halogéno ; et
la combinaison dudit composant isocyanate et dudit dérivé d'acide organique, le rapport du poids dudit composant isocyanate au poids combiné dudit dérivé d'acide organique et dudit composant isocyanate étant de 0,7 à 0,95 avant la réaction ;
le chauffage dudit composant isocyanate et dudit dérivé d'acide organique à une première température ; et
le maintien de la première température pendant une première durée, de façon telle que ledit composant isocyanate et ledit dérivé d'acide organique réagissent pour former un polyuréthane ;
le chauffage du polyuréthane à une seconde température supérieure à la première température, la seconde température étant dans la plage de 70 à 130 degrés Celsius ; et
le maintien de la seconde température pendant une seconde durée de façon telle qu'un composé isocyanate modifié est formé.

6. Procédé selon la revendication 5, dans lequel la première température est inférieure ou égale à 70 degrés Celsius ou dans lequel la première durée et la seconde durée s'élèvent ensemble à au moins une heure ou dans lequel ledit dérivé d'acide organique est présent en une quantité d'au moins un pour cent en poids par rapport au poids combiné dudit composé isocyanate modifié, dudit composant isocyanate et dudit dérivé d'acide organique.

7. Procédé selon la revendication 5 ou la revendication 6, dans lequel ledit dérivé d'acide organique est présent en une quantité d'au moins un pour cent en poids par rapport au poids combiné dudit composé isocyanate modifié, dudit composant isocyanate et dudit dérivé d'acide organique et dans lequel ledit dérivé d'acide organique est présent en une quantité inférieure ou égale à 50 pour cent en poids par rapport au poids combiné dudit composé isocyanate modifié, dudit composant isocyanate et dudit dérivé d'acide organique.

8. Procédé selon l'une quelconque de la revendication 7, dans lequel ledit dérivé d'acide organique est présent en une quantité d'au moins un pour cent en poids par rapport au poids combiné dudit composé isocyanate modifié, dudit composant isocyanate et dudit dérivé d'acide organique et dans lequel le composé isocyanate modifié a une teneur moyenne en groupes NCO libres d'au moins 19 pour cent et de pas plus de 30 pour cent.

9. Procédé selon l'une quelconque des revendications 6 à 8, dans lequel M est le phosphore, E est l'oxygène et R est un groupe butyle et dans lequel ledit composant isocyanate est choisi dans le groupe du MDI, du MDI polymère, du TDI et des associations de ceux-ci ou
dans lequel ledit dérivé d'acide organique est choisi dans le groupe de l'ester monobutylique de l'acide phosphorique, de l'ester dibutylique de l'acide phosphorique, de l'ester monophénylique de l'acide phosphorique, de l'ester diphénylique de l'acide phosphorique, de l'ester 2-butoxy-1-éthylique de l'acide phosphorique, du dihydrogénophosphate de 2-éthylhexyle, du dihydrogénophosphate de cétyle, du dihydrogénophosphate de stéaryle, du dihydrogénophosphate de butyle, de l'hydrogénophosphate de dibutyle, du dihydrogénophosphate de monométhyle, de l'hydrogénophosphate de diméthyle, du dihydrogénophosphate de monoéthyle, de l'hydrogénophosphate de diéthyle, du dihydrogénophosphate de monopropyle, de l'hydrogénophosphate de dipropyle, des dérivés substitués par halogéno de ceux-ci et des associations de ceux-ci.

10. Procédé selon l'une quelconque des revendications 7 à 9, dans lequel ledit dérivé d'acide organique est présent en une quantité d'au moins un pour cent en poids par rapport au poids combiné dudit composé isocyanate modifié, dudit composant isocyanate et dudit dérivé d'acide organique et comprenant en outre l'étape consistant à faire réagir la composition d'isocyanate modifié avec un second composant isocyanate et dans lequel le second composant isocyanate est choisi dans le groupe du MDI, du MDI polymère, du TDI et des associations de ceux-ci.
